# EUROPÄISCHE PATENTSCHRIFT

(11) **EP 2 471 029 B1**
(45) Veröffentlichungstag und Bekanntmachung des Hinweises auf die Patenterteilung: **03.05.2017**
(21) Anmeldenummer: 10742707.2
(22) Anmeldetag: 01.07.2010
(51) Int. Cl.: G06K 19/077, G06K 19/07

(54) **GEFALTETES UND BEDRUCKTES PFLEGEETIKETT FÜR TEXTILIEN**
FOLDED AND PRINTED CARE LABEL FOR TEXTILES
ÉTIQUETTE D'ENTRETIEN IMPRIMÉE ET PLIÉE POUR DES TEXTILES

(30) Priorität: 25.08.2009 DE 102009038511
(43) Veröffentlichungstag der Anmeldung: 04.07.2012
(73) Patentinhaber: Astra Gesellschaft Für Asset Management MbH&Co. Kg, 30890 Barsinghausen (DE)
(72) Erfinder: STOBBE, Anatoli, 30890 Barsinghausen (DE); MAASS, Norman, 30455 Hannover (DE)
(74) Vertreter: Patentanwälte Thömen & Körner
(86) Internationale Anmeldenummer: PCT/DE2010/000760
(87) Internationale Veröffentlichungsnummer: WO 2011/023151

(56) Entgegenhaltungen:
- WO-A1-2005/074071
- WO-A1-2006/029543
- WO-A1-2008/011739
- WO-A2-2005/071605
- US-A1- 2006 238 436

## Beschreibung

Die Erfindung betrifft ein gefaltetes und bedrucktes Pflegeetikett für Textilien.

Bekleidungsstücke, wie Hemden, T-Shirts, Hosen usw. werden bekanntlich auf ihrer Innenseite mit einem textilen Pflegeetikett versehen, welches zumeist einseitig mit Informationen bedruckt ist. Diese Informationen betreffen üblicherweise Anleitungen zur Pflege (Reinigung und Wäsche) des Bekleidungsstückes sowie gegebenenfalls noch die Angabe des Herstellers des betreffenden Bekleidungsstückes.

Das diesbezügliche Pflegeetikett besteht aus einem streifenförmigen Gewebeband, welches in seiner Mitte gefaltet wird, wodurch zwei Abschnitte gebildet werden, die im gefalteten Zustand des Gewebebandes übereinander liegen. Die bedruckte Seite befindet sich dabei auf den beiden sichtbaren Außenseiten der gefalteten Abschnitte.

Die aufgedruckten Informationen benötigen verhältnismäßig viel Platz, wodurch das Gewebeband vergleichsweise lang wird. Deshalb ist es üblich, das Gewebeband wie beschrieben zu falten, wodurch die Länge des Gewebebandes, also die Länge des Pflegeetiketts halbiert wird.

In der Praxis besteht zunehmend der Wunsch, dem Bekleidungsstück noch weitere Informationen zuzuordnen, wie z.B. Farbe und Größe des Bekleidungsstückes.

Man könnte nun daran denken, zu diesem Zweck auf das Pflegeetikett einen Barcode anzubringen bzw. aufzudrucken, allerdings würde das Pflegeetikett dann unter Umständen noch länger werden.

Außerdem hat sich in der Praxis gezeigt, dass die Verwendung von Barcodes mit Nachteilen behaftet ist. So muss der Barcode zum Lesen und zum Erfassen seiner Informationen stets sichtbar zugänglich sein. Es ist daher erforderlich, das Bekleidungsstück in die Hand zu nehmen und Pflegeetikett so zu positionieren, dass der Barcode optisch sichtbar gelesen werden kann.

Hier greift die Erfindung ein, welcher die Aufgabe zugrundeliegt, in einem Pflegeetikett wesentlich mehr Informationen zur Identifikation des betreffenden Bekleidungsstückes bei Produktion, Logistik, Vertrieb usw. unterzubringen und zu speichern und diese Informationen problemlos ablesen zu können, ohne dass das Pflegeetikett optisch einsehbar ist, und ohne dass die Länge des Pflegeetiketts verlängert werden muß.

Die Lösung dieser Aufgabe erfolgt durch die Merkmale des Patentanspruchs 1. Vorteilhafte Weiterbildungen der Erfindung sind in den Unteransprüchen wiedergegeben.

Die Erfindung schlägt den Einsatz eines Transponders vor, welcher hinsichtlich der Lesbarkeit, des Umfangs der gespeicherten Informationen sowie der Manipulationssicherheit den üblichen Barcodes deutlich überlegen ist. Ein solcher Transponder ist beispielsweise durch die Dokumente WO 2008/011739 A1 und WO 2005/071605 A2 bekannt.

Bei der Erfindung wird wie folgt vorgegangen. Zur Erzeugung von Pflegeetiketten wird zunächst in das streifenförmige Gewebeband zugleich mit der Herstellung eine Antennenstruktur in dem Gewebeband erzeugt. Bei der Antennenstruktur handelt es sich vorzugsweise um einen E-Feld-Strahler. Das Gewebeband ist mit periodischen Rapportmarken versehen, die als Schneidemarken dienen und die Stellen kennzeichnen, an denen das Gewebeband durchgeschnitten wird, um ein einzelnes Pflegeetikett zu bilden.

Bei mit Kunststoff beschichteten Pflegeetiketten kann die Antenne auch mit einer leitenden Farbe aufgedruckt oder durch eine zusätzliche leitfähige Beschichtung aufgebracht werden. Beschichtete Pflegeetiketten haben eine schlechtere Haptik, lassen sich aber besser bedrucken.

Auf das Gewebeband wird ein an sich bekanntes sehr kleines Detektierplättchen, bestehend aus einem Chip mit einem kreisförmigen Koppelelement, im Bereich des E-Feld-Strahlers angebracht. Der Chip, die Koppelschleife und der E-Feld-Strahler bilden zusammen den eigentlichen textilen arbeitsfähigen Transponder mit einer angenehmen textilen Haptik, da es sich bei dem Pflegeetikett um ein Gewebe handelt, anders als bei bekannten Plastik-Transpondern, die einfach in eine textile Tasche eingelegt werden.

Vorteilhafterweise, da im Textilfertigungsprozess sehr schlecht leitende Verbindungen herstellbar sind, wird das Detektierplättchen kontaktlos induktiv oder kapazitiv in die gewebte bzw. textile Antennenstruktur eingekoppelt.

Das Gewebeband wird in seiner Mitte gefaltet, und zwar in der Weise, dass die Antennenstruktur des E-Feld-Strahlers der beiden übereinander gefalteten Teile aufeinanderliegen. Die Antennenstruktur ist hierbei vorzugsweise spiegelsymmetrisch zur Faltkante gelegt.

Wenn die Antennenstrukturen allgemein übereinanderliegen, oder vorzugsweise deckungsgleich aufeinanderliegen, entstehen praktisch zwei parallel gekoppelte Antennen, durch welche der Transponder sehr breitbandig wird. Der Transponder ist damit unempfindlich gegen Verstimmungen, wie sie zum Beispiel beim Einbringen in verschiedenartige Textilien in der Praxis auftreten können.

Bei dem Webverfahren zur Erzeugung der Antennenstruktur aus Kett- und/oder Schussfäden werden dünne leitende Fäden verwendet. Nach dem Faltvorgang liegen diese dünnen Fäden übereinander, wodurch hinsichtlich der übereinanderliegenden Antennenfäden mehr Volumen und eine größere Abstrahlfläche entsteht. Vorzugsweise werden isolierte leitende Fäden verwendet.

Überraschend hat sich bei der Erfindung gezeigt, dass der Transponder auf dem Pflegeetikett arbeitsfähig ist, obwohl nach dem Falten die Antennenstrukturen der beiden gefalteten Teile des Gewebebandes übereinanderliegen, wodurch zwei parallele Antennen gebildet werden. Es wurde gefunden, dass nach dem Faltvorgang eine neue Antennenstruktur entsteht, mit einer anderen Resonanzfrequenz als im nicht gefalteten Zustand. Durch die neue - gefaltete - Antennenstruktur wird der Transponder sehr breitbandig. Damit einher geht eine schlechtere Güte der Antenne, gleichwohl ist der Transponder für den vorgesehenen Einsatzzweck arbeitsfähig, wobei die breitbandige Resonanzfrequenz in gewünschter Weise eine Größenordnung von 860 MHz besitzt. Diese Frequenz weicht erheblich von der Resonanzfrequenz ab, welche die Antennenstruktur im nicht gefalteten Zustand des Gewebebandes aufweist.

Das Falten des Gewebebandes erfolgt vorzugsweise derart, dass das Detektierplättchen von dem einen gefalteten Abschnitt abgedeckt ist und somit innen zwischen den aufeinander liegenden Abschnitten angeordnet ist.

Es ist zwar an sich schon bekannt, zur Kennzeichnung von Textilien einen Transponder zu verwenden. Dies erfolgt in der Weise, dass ein Transponder an dem üblichen Anhängeetikett (Hangtag aus Papier oder Karton) des Bekleidungsstückes angebracht wird. Demgegenüber sieht die Erfindung in neuartiger Weise die Verwendung eines textilen Transponders mit eingewebter Antennenstruktur bei einem gefalteten Pflegeetikett vor.

Der textile Transponder gemäß der Erfindung weist gegenüber dem mit einem Transponder versehenen Handtag erhebliche Vorteile auf. Bei der Erfingung wird der Transponder direkt bei der Produktion des Pflegeetiketts sozusagen "mit der ersten Naht" eingenäht und steht unmittelbar nach Fertigstellung des mit dem Pflegeetikettes versehenen Bekleidungsstückes arbeitsfähig zur Verfügung. Dadurch ist ein sehr frühzeitiger Nutzen durch Identifikation während der Produktion, Aufbereitung, Verpachung und Versand möglich.

Demgegenüber wird der bekannte Transponder am Hantag erst später am Bekleidungsstück bzw. nur an der Verpackung befestigt, während das Bekleidungsstück bei der Erfindung sofort eindeutig gekennzeichnet ist. Es entstehen auch keine zusätzlichen Kosten für das Anbringen eines Handtags mit Transponder.

Bei der Erfindung ist die Antenne in das Gewebe des Pflegeetiketts eingewebt, so dass man von einer textilen Antenne spricht. Diese textile Antenne ist erheblich widerstandsfähiger als bei dem Handtag-Transponder.

Insgesamt ist er textile Transponder bei der Erfindung sehr unempfindlich gegen textile Aufbereitung oder Reinigung nach dem Versand. Demgegenüber würde sich ein Handtag aus Papier oder Pappe bereits bei den hohen Heissdampftemperaturen einer üblichen ersten Reinigung nach der Produktion im so genannten "Tunnelfinisher" auflösen. Deshalb kann das Hantag erst am Ende der Kette von der Herstellung über den Versand, der Lagerung bis zum Verkauf (Supply Chain) angebracht werden.

Der textile Transponder bei der Erfindung ermöglicht die Speicherung von wesentlich mehr Informationen als bei dem üblichen Barcode. Außerdem lässt sich der Transponder lesen, ohne dass ein Sichtkontakt erforderlich ist.

Mithilfe des Transponders lässt sich jedes mit dem erfindungsgemäßen Pflegeetikett versehenes Bekleidungsstück eindeutig und genauer als mit einem Barcode kennzeichnen. So lässt sich zum Beispiel feststellen, dass ein bestimmtes Kleidungsstück X das Y-te Stück von insgesamt Z Stück einer Serienproduktion ist.

Es sind auch von Anfang an weitere wichtige Informationen für die Logistik, die Lagerhaltung und den Vertrieb möglich.

Die Befestigung des Detektierplättchens auf dem Pflegeetikett kann dadurch erfolgen, dass das Detetierplättchen auf das streifenförmige Gewebeband aufgeklebt wird.

In vielen Fällen werden die Bekleidungsstücke mit den Pflegeetiketten nach der Produktion einer so genannten Enzymwäsche unterzogen, die sehr agressiv verläuft. In solchen Fällen lässt sich nicht ausschließen, dass das aufgeklebte Detektierplättchen sich löst. Daher besteht auch die Möglichkeit, das Detektierplättchen, also den Chip mit der Koppelschleife, auf das Pflegeetikett aufzunähen, so wie man einen Ersatzknopf an das Pflegeetikett annäht.

Als ein Vorteil der Erfindung ist es auch noch anzusehen, dass der Transponder auch als Diebstahlschutz (EAS) verwendet werden kann, so dass eine zusätzliche EAS-Kennzeichnung nicht nötig ist.

Anhand des in der Zeichnung dargestellten Ausführungsbeispiels wird die Erfindung nachfolgend näher erläutert. Es zeigen:
- Fig. 1: eine Seitenansicht und eine Draufsicht eines Gewebebandes mit einer eingewebten Antenne und mit einem Detektierplättchen,
- Fig. 2: einen abgeschnittenen Teil eines Gewebebandes, welches längs einer mittleren Faltlinie gefaltet wird, und
- Fig. 3: ein Bekleidungsstück mit einem Pflegeetikett.

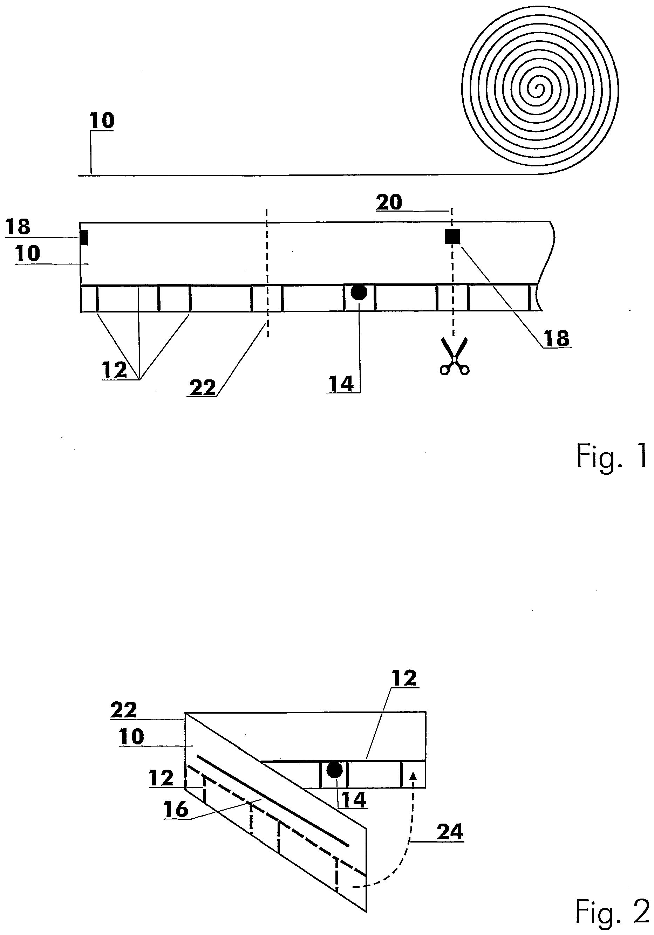

Fig. 1 zeigt ein von einer Rolle abgewickeltes streifenförmiges Gewebeband 10 zur Herstellung eines Pflegeetiketts. In das Gewebeband 10 ist eine endlose Antenne als E-Feld-Strahler 12 eingewebt. Auf das Gewebeband 10 ist im unteren Bereich, wo sich der E-Feld-Strahler 12 befindet, ein Detektierplättchen 14 - bestehend in an sich bekannter Weise aus einem Chip und einer Koppelschleife - aufgeklebt, und zwar mittig zwischen zwei sich senkrecht erstreckenden Teilen des E-Feld-Strahlers 12.

Das Gewebeband 10 ist mit sich periodisch wiederholenden Rapportmarken 18 versehen, welche Schneidelinien 20 festlegen, längs deren das Gewebeband 10 geschnitten wird, um ein einzelnes Pflegeetikett bilden zu können. In Figur 1 ist das Gewebeband 10 auf seiner einen rückwärtigen Seite bedruckt.

Figur 2 veranschaulicht, wie aus dem abgeschnittenen Teil des Gewebebandes 10 durch Falten längs einer Faltenlinie 22 ein gefaltetes Pflegeetikett gebildet wird. Durch die gestrichelte Linie 24 ist der Faltvorgang angedeutet. Das Falten längs der mittigen Faltenlinie 22 erfolgt derart, dass die beiden Antennenstrukturen der gefalteten Teile nach Abschluss des Faltvorganges aufeinander liegen, wodurch praktisch zwei parallele Antennen gebildet werden, wodurch der Transponder sehr breitbandig arbeitet. Im zusammengefalteten Zustand des streifenförmigen Gewebebandes 10 sind die beiden bedruckten Seiten 16 von außen sichtbar.

Das Detektierplättchen 14 liegt im zusammengefalteten Zustand des Gewebebandes 10 innen zwischen den gefalteten Teilen des Gewebebandes, da es in Fig. 2 von dem unteren Teil des Gewebebandes 10 abgedeckt wird.

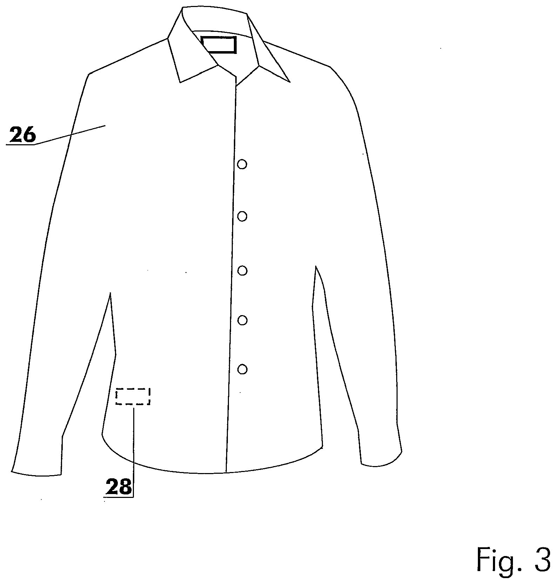

Figur 3 zeigt ein Bekleidungsstück 26, zum Beispiel ein Hemd, an dessen Innenseite das erfindungsgemäße gefaltete Pflegeetikett 28 mit einem Transponder angebracht ist. Der Transponder arbeitet beispielsweise im UHF-Bereich bei etwa 900 MHz.

## Patentansprüche

1. Gefaltetes und bedrucktes Pflegeetikett (28) für Textilien (26), **dadurch gekennzeichnet, dass** in ein das Pflegeetikett (28) bildendes Stück eines Gewebebandes (10) eine Antennenstruktur (12) eingewebt ist, dass neben einer mittig angeordneten Faltlinie (22) ein Detektierplättchen (14) im Bereich der Antennenstruktur (12) auf dem Gewebeband befestigt ist, und dass das Gewebeband (10) längs der Faltlinie (22) derart gefaltet ist, dass die Antennenstrukturen (12) der gefalteten Abschnitte nach dem Falten übereinander liegend.

2. Pflegeetikett nach Anspruch 1, **dadurch gekennzeichnet, dass** die Antennenstruktur (12) spiegelsymmetrisch zur Faltlinie (22) angeordnet ist.

3. Pflegeetikett nach Anspruch 1, **dadurch gekennzeichnet, dass** die Antennenstrukturen der gefalteten Abschnitte nach dem Falten deckungsgleich aufeinander liegen.

4. Pflegeetikett nach einem der vorhergehenden Ansprüche 1 - 3, **gekennzeichnet durch** folgende Merkmale:
a) bei der Herstellung eines endlosen streifenförmigen Gewebebandes (10) als Basismaterial für das Pflegeetikett (28) ist zugleich eine endlose Antennenstruktur (12) aus elektrisch leitfähigem Material in das Gewebeband (10) eingewebt,
b) die Antennenstruktur (12) ist **durch** einen Faden mit leitfähigem Anteil als Kett- oder Schussfaden eingetragen,
c) die Antennenstruktur (12) wiederholt sich in ihrem Aufbau periodisch,
d) das Gewebeband (10) ist mit sich periodisch wiederholenden Rapportmarken (18) versehen, welche Schneidlinien (20) festlegen,
e) ein abgeschnittener Abschnitt zwischen zwei benachbarten Rapportmarken (18) bildet die Grundlage für ein einzelnes Pflegeetikett (28),
f) auf dem Pflegeetikett (28) befindet sich im Bereich der Antennenstruktur (12) ein Detektierplättchen (14) aus einem Chip und einer Koppelschleife zur Kopplung mit der Antennenstruktur (12),
g) der abgeschnittene Abschnitt des Gewebebandes (10) ist längs einer mittigen Faltlinie (22) gefaltet.

5. Pflegeetikett nach einem der vorhergehenden Ansprüche 1 - 4, **dadurch gekennzeichnet, dass** die Antennenstruktur (12) durch einen E-Feld-Strahler gebildet ist.

6. Pflegeetikett nach einem der vorhergehenden Ansprüche 1 - 5, **dadurch gekennzeichnet, dass** das Detektierplättchen (14) auf das Pflegeetikett (28) aufgeklebt ist.

7. Pflegeetikett nach einem der vorhergehenden Ansprüche 1 - 6, **dadurch gekennzeichnet, dass** das Detektierplättchen (14) an das Pflegeetikett (28) angenäht ist.

8. Pflegeetikett nach einem der vorhergehenden Ansprüche 1 - 7, **dadurch gekennzeichnet, dass** durch das Falten eine neue Antennenstruktur (12) gebildet ist, durch welche die Bandbreite des Transponders erhöht wird.

9. Pflegeetikett nach einem der vorhergehenden Ansprüche 1 - 8, **dadurch gekennzeichnet, dass** das Detektierplättchen (14) kontaktlos in die gewebte und gefaltete Antennenstruktur (12) eingekoppelt ist.

10. Pflegeetikett nach einem oder mehreren der vorhergehenden Ansprüche 1 - 7, **dadurch gekennzeichnet, dass** die Antennenstruktur (12) durch auf das mit Kunststoff beschichtete Gewebeband (10) aufgedruckte leitende Farbe gebildet ist.

11. Pflegeetikett nach einem oder mehreren der vorhergehenden Ansprüche 1 - 7, **dadurch gekennzeichnet, dass** die Antennenstruktur bei einem mit Kunststoff beschichteten Gewebeband (10) durch eine zusätzliche leitfähige Beschichtung gebildet ist.

12. Pflegeetikett nach einem oder mehreren der vorhergehenden Ansprüche 1 - 5, **dadurch gekennzeichnet, dass** die eingewebten, die Antennenstruktur (12) bildenden Antennenfäden isolierte Drähte sind.

## Claims

1. A folded and printed care label (28) for textiles (26), **characterised in that** an antenna structure (12) is woven into a piece of a fabric ribbon (10) that forms the care label (28), a detecting plate (14) is attached onto the fabric ribbon in the area of the antenna structure (12) next to a centrally arranged fold line (22), and the fabric ribbon (10) is folded along the fold line (22) such that the antenna structures (12) of the folded sections are situated on top of each other after being folded.

2. The care label according to Claim 1, **characterised in that** the antenna structure (12) is arranged mirror-symmetrically relative to the fold line (22).

3. The care label according to Claim 1, **characterised in that** the antenna structures of the folded sections are situated congruently on each other after being folded.

4. The care label according to any one of the preceding Claims 1 - 3, **characterised by** the following features:
a) during the manufacture of a continuous strip-shaped fabric ribbon (10) as the base material for the care label (28), a continuous antenna structure (12) made of electro-conductive material is simultaneously woven into the fabric ribbon (10),
b) the antenna structure (12) is incorporated as a warp or weft thread by means of a thread with a conductive part,
c) the design of the antenna structure (12) periodically repeats itself,
d) the fabric ribbon (10) is provided with periodically repeating pattern repeat marks (18) that define cutting lines (20),
e) a cutaway section between two adjacent pattern repeat marks (18) forms the basis for a single care label (28),
f) a detecting plate (14) comprised of a chip and a coupling loop for coupling with the antenna structure (12) is located on the care label (28), in the region of the antenna structure (12),
g) the cutaway section of the fabric ribbon (10) is folded along a central fold line (22).

5. The care label according to any one of the preceding Claims 1 - 4, **characterised in that** the antenna structure (12) is formed by an electrical field emitter.

6. The care label according to any one of the preceding Claims 1 - 5, **characterised in that** the detecting plate (14) is glued onto the care label (28).

7. The care label according to any one of the preceding Claims 1 - 6, **characterised in that** the detecting plate (14) is sewn onto the care label (28).

8. The care label according to any one of the preceding Claims 1 - 7, **characterised in that** a new antenna structure (12) is formed by folding, as a result of which the bandwidth of the transponder is increased.

9. The care label according to any one of the preceding Claims 1 - 8, **characterised in that** the detecting plate (14) is contactlessly coupled into the woven and folded antenna structure (12).

10. The care label according to one or more of the preceding Claims 1 - 7, **characterised in that** the antenna structure (12) is formed by conductive paint imprinted onto the plastic-coated fabric ribbon (10).

11. The care label according to one or more of the preceding Claims 1 - 7, **characterised in that** the antenna structure, in the case of a plastic-coated fabric ribbon (10), is formed by an additional conductive coating.

12. The care label according to one or more of the preceding Claims 1 - 5, **characterised in that** the interwoven antenna threads that form the antenna structure (12) are isolated strands.

## Revendications

1. Etiquette d'entretien pliée et imprimée (28) pour textiles (26) **caractérisée en ce qu'une** structure d'antenne (12) est insérée dans une partie d'une bande de tissu (10) formant l'étiquette d'entretien (28), **en ce qu'**une plaquette de détection (14) est fixée sur la bande de tissu dans la région de la structure d'antenne, à côté d'une ligne de pliage disposée centrée (22) et **en ce que** la bande de tissu (10) est pliée le long de la ligne de pliage (22) de sorte que les structures d'antenne (12) des segments pliés soient superposées après le pliage.

2. Etiquette d'entretien suivant la revendication 1, **caractérisée en ce que** la structure d'antenne (12) est disposée de façon symétrique inverse par rapport à la ligne de pliage (22).

3. Etiquette d'entretien suivant la revendication 1, **caractérisée en ce que** les structures d'antennes des segments pliés sont superposées de sorte qu'elles coïncident les unes avec les autres après le pliage.

4. Etiquette d'entretien suivant une des revendications précédentes 1 à 3, **caractérisée par** les particularités suivantes :
a) lors de la fabrication d'une bande de tissu sans fin en forme de ruban (10) servant de matériau de base pour l'étiquette d'entretien (28), une structure d'antenne (12) sans fin en matériau électriquement conducteur est insérée dans la bande de tissu (10),
b) la structure d'antenne (12) est insérée sous la forme d'un fil avec une partie conductrice comme fil de chaîne ou de trame,
c) la structure d'antenne (12) se répète périodiquement en ce qui concerne sa conception,
d) la bande de tissu (10) est pourvue de marques de rapport (18) se répétant périodiquement, qui définissent des lignes de coupe (20),
e) un segment coupé entre deux marques de rapport (18) voisines forme la base d'une étiquette d'entretien (28) distincte,
f) une plaquette de détection (14) comportant une puce et une boucle de couplage pour le couplage à la structure d'antenne (12), se situe sur l'étiquette d'entretien (28) dans la région de la structure d'antenne (12),
g) le segment coupé de la bande de tissu (10) est plié le long d'une ligne de pliage centrée (22).

5. Etiquette d'entretien suivant une des revendications précédentes 1 à 4, **caractérisée en ce que** la structure d'antenne (12) est formée par une antenne à champ E.

6. Etiquette d'entretien suivant une des revendications précédentes 1 à 5, **caractérisée en ce que** la plaquette de détection (14) est collée sur l'étiquette d'entretien (28).

7. Etiquette d'entretien suivant une des revendications précédentes 1 à 6, **caractérisée en ce que** la plaquette de détection (14) est cousue sur l'étiquette d'entretien (28).

8. Etiquette d'entretien suivant une des revendications précédentes 1 à 7, **caractérisée en ce que** le pliage a pour effet qu'une nouvelle structure d'antenne (12) est formée qui augmente la largeur de bande du transpondeur.

9. Etiquette d'entretien suivant une quelconque des revendications précédentes 1 à 8, **caractérisée en ce que** la plaquette de détection (14) est couplée sans contact à la structure d'antenne tissée et pliée (12).

10. Etiquette d'entretien suivant une ou plusieurs des revendications précédentes 1 à 7, **caractérisée en ce que** la structure d'antenne (12) est formée par une encre conductrice, dont la bande de tissu (10) enduite de matière artificielle est imprimée.

11. Etiquette d'entretien suivant une ou plusieurs des revendications précédentes 1 à 7, **caractérisée en ce que** dans le cas d'une bande de tissu (10) enduite de matière artificielle, la structure d'antenne est formée par une enduction conductrice supplémentaire.

12. Etiquette d'entretien suivant une ou plusieurs des revendications précédentes 1 à 5, **caractérisée en ce que** les fils d'antenne insérés formant la structure d'antenne (12) sont des fils isolés.
